Europäisches Patentamt

European Patent Office

Office européen des brevets

(11) Veröffentlichungsnummer: **0 020 877**
**B1**

# (12) EUROPÄISCHE PATENTSCHRIFT

(45) Veröffentlichungstag der Patentschrift:
31.08.83

(21) Anmeldenummer: 80101677.5

(22) Anmeldetag: 28.03.80

(51) Int. Cl.³: **G 01 N 21/25,** G 01 N 21/59 //
(G01J1/16)

(54) Signalauswerterschaltung für ein Messgerät zur Messung der Extinktion.

(30) Priorität: 15.06.79 DE 2924131

(43) Veröffentlichungstag der Anmeldung:
07.01.81 Patentblatt 81/1

(45) Bekanntmachung des Hinweises auf die Patenterteilung:
31.08.83 Patentblatt 83/35

(84) Benannte Vertragsstaaten:
**DE FR GB IT**

(56) Entgegenhaltungen:
**DE-A-2 346 904**
**DE-A-2 346 904**
**DE-A-2 351 291**
**DE-A-2 351 291**
**DE-A-2 557 268**
**DE-A-2 557 268**
**DE-A-2 632 160**
**DE-A-2 632 160**
**DE-A-2 817 333**
**DE-A-2 817 333**
**US-A-3 484 596**
**US-A-3 484 596**

(73) Patentinhaber: **Bodenseewerk Geosystem GmbH, Alte Nussdorfer Strasse 15, D-7770 Überlingen/Bodensee (DE)**

(72) Erfinder: **Spaeth, Tilman Philip, Dipl.-Ing., Am Häslerain 22, D-7767 Sipplingen (DE)**

(74) Vertreter: **Wolgast, Rudolf, Dr. et al, Bökenbusch 41 Postfach 11 03 86, D-5620 Velbert 11 Langenberg (DE)**

Signalauswerterschaltung für ein Messgerät zur Messung der Extinktion

Die Erfindung betrifft eine Signalauswerterschaltung für ein Messgerät zur Messung der Extinktion einer Probe, bei welchem ein von einer Lichtquelle ausgehendes Strahlenbündel durch die Probe auf einen Detektor geleitet wird und durch eine Filtereinrichtung alternierend zwei Filter mit unterschiedlicher spektraler Durchlässigkeit in den Strahlengang des Strahlenbündels bewegbar sind, enthaltend: einen rücksetzbaren Integrator, auf welchen das Detektorsignal synchronisiert mit der Filtereinrichtung während eines Referenzzeitintervalls und während eines Messzeitintervalls aufschaltbar ist, einen vom Ausgangssignal des Integrators beaufschlagten Logarithmierer, eine erste und eine zweite Speicherschaltung, auf welche das Ausgangssignal des Logarithmierers aufschaltbar ist, eine Ablaufsteuerung, welche Steuersignale liefert, durch die das Detektorsignal während der Referenz- und Messzeitintervalle auf den Integrator aufschaltbar, nach jedem Referenz- bzw. Messzeitintervall das Ausgangssignal des Logarithmierers auf die erste bzw. zweite Speicherschaltung übertragbar und anschliessend jeweils der Integrator rücksetzbar ist, und einen Differenzverstärker, der die in den Speicherschaltungen gespeicherten Signale erhält und ein Ausgangssignal liefert.

Das Messgerät kann benutzt werden, um die Konzentration einer gesuchten Substanz in einer Probe über eine Extinktionsmessung zu bestimmen. Zu diesem Zweck ist das eine der Filter in einem Wellenlängenbereich durchlässig, der mit einer Absorptionsbande der gesuchten Substanz zusammenfällt. Das andere Filter ist in einem Bereich durchlässig, der ausserhalb der Absorptionsbande der gesuchten Substanz liegt. Wenn das letztgenannte Filter im Strahlengang des Strahlenbündels liegt, ergibt sich ein Referenzsignal, welches eine Berücksichtigung der Untergrundabsorption oder von Änderungen der Lichtquellenhelligkeit oder der Detektorempfindlichkeit gestattet. Wenn das erstgenannte Filter im Strahlengang des Strahlenbündels liegt, ergibt sich am Detektor ein Messsignal, welches von der Extinktion der Strahlung durch die Probe und damit von der Konzentration der gesuchten Substanz in der Probe abhängig ist.

Bei einem bekannten Gerät der vorstehend geschilderten Art werden das Referenzsignal und das Messsignal dadurch gewonnen, dass das Detektorsignal synchronisiert mit der Filtereinrichtung während eines Referenzzeitintervalls und während eines Messzeitintervalls integriert wird, wobei die Integrale ein Mass für das Referenzsignal bzw. für das Messsignal liefern. Die Extinktion ist im Idealfall gleich dem Logarithmus des Verhältnisses von Referenzsignal und Messsignal bzw. der Differenz der Logarithmen dieser beiden Signale. Diese Extinktion ist dann proportional der Konzentration der gesuchten Substanz.

Dies gilt unter Voraussetzung der Gültigkeit des Beerschen Gesetzes. Manche Substanzen zeigen Abweichungen von diesem Beerschen Gesetz. Das bedeutet, dass das Ausgangssignal, welches durch Differenzbildung der logarithmierten Integrale erhalten wird, nicht linear von der Konzentration abhängt. Hierdurch wird die Messung erheblich erschwert.

Der Druckschrift US-A-3 484 596 ist bereits eine Signalauswerteschaltung für ein Messgerät zur Messung der Extinktion als bekannt zu entnehmen, welche der Kompensation von Abweichungen vom Lambert-Beerschen Gesetz dient. Die bekannte Auswerteschaltung enthält einen Integrator, dessen Eingang an das Messgerät angeschlossen ist, einen an den Integrator angeschlossenen Logarithmierer, einen mit dem Logarithmierer verbundenen Summierer und ein Anzeigegerät. Die erwähnte Kompensation erfolgt dadurch, dass dem Eingang des Integrators bzw. dem Eingang des Summierers jeweils Kompensationsspannungen zugeführt werden.

Bei Messgeräten, die im Bereich infraroter Strahlung arbeiten, erfolgt weiterhin eine Beeinflussung der Messergebnisse durch die Eigenstrahlung, die von Teilen des Messgerätes selbst emittiert wird. Ein weiterer Einfluss entsteht dadurch, dass die Durchlässigkeit der Filter in den Bereichen, in denen die Filter durchlässig sind, dem Betrag nach für die beiden Filter unterschiedlich sein kann.

Der Erfindung liegt die Aufgabe zugrunde, eine Signalauswerterschaltung für ein Messgerät der eingangs definierten Art so auszubilden, dass einerseits der Einfluss von Eigenstrahlung und der «Filterfaktor» kompensiert werden kann und anderseits auch bei einer Abweichung vom Beerschen Gesetz ein linear von der Konzentration von einer gesuchten Probe abhängiges Ausgangssignal erhalten wird.

Erfindungsgemäss wird diese Aufgabe dadurch gelöst, dass

(a) am Eingang des Integrators während des Referenz- bzw. des Messzeitintervalls je eine einstellbare Korrekturspannung dem Detektorsignal überlagert ist,

(b) das Detektorsignal auf den Eingang des Integrators über zwei parallele Kanäle aufgeschaltet ist, von denen jeder einen Widerstand und einen gesteuerten Schalter enthält,

(c) wenigstens einer der vorgenannten Widerstände einstellbar ist und

(d) die gesteuerten Schalter von der Ablaufsteuerung so gesteuert sind, dass während des Referenzzeitintervalls der eine und während des Messzeitintervalls der andere Schalter leitend ist, wobei die Korrekturspannungen und der einstellbare Widerstand so eingestellt werden, dass sich unter Berücksichtigung der Eigenstrahlung von Geräteteilen und der unterschiedlichen Durchlässigkeiten der Filter sowie von Abweichungen der Extinktion vom Beerschen Gesetz ein im wesentlichen linearer Zusammenhang zwischen Ausgangssignal und Konzentration ergibt.

Durch die Überlagerung der einstellbaren Korrekturspannungen zu den Referenz- bzw. Messsignalen am Eingang des Integrators kann eine Krümmung der Extinktions-Konzentrations-Kennlinie kompensiert werden, die abweichend von dem Beerschen Gesetz auftritt. Ein dabei hervorgerufener Versatz des Nullpunktes wird dadurch kompensiert, dass das Verhältnis der vom Detektor auf den Eingang des Integrators gegebenen Signale verändert wird. Eine solche Veränderung des Verhältnisses um einen konstanten Faktor wirkt sich also nach der Logarithmierung als Summand aus, durch dessen Wahl sichergestellt werden kann, dass das Ausgangssignal als Funktion der Konzentration durch den Koordinatenursprung geht, dass also bei einer Konzentration Null auch das Ausgangssignal Null wird.

Die gleichen Korrekturspannungen können dazu dienen, den Einfluss der Eigenstrahlung von Gerätebauteilen zu kompensieren. Die vorstehend geschilderte Linearisierung wird dann durch «Fehlkompensation» der Eigenstrahlungseinflüsse erreicht.

In ähnlicher Weise kann die Einstellung des einstellbaren Widerstandes in dem einen der zum Eingang des Integrators führenden Kanäle dazu benutzt werden, den «Filterfaktor» zu berücksichtigen. Auch hier kann durch eine «Fehlkompensation» erreicht werden, dass die linearisierte Konzentration-Ausgangssignal-Charakteristik durch den Koordinatenursprung geht.

Eine weitere Ausgestaltung der Erfindung ist Gegenstand des Patentanspruchs 2.

Ein Ausführungsbeispiel der Erfindung ist nachstehend unter Bezugnahme auf die zugehörige Zeichnung näher erläutert, die vereinfacht eine Signalauswerterschaltung nach der Erfindung zeigt.

Die Signalauswerterschaltung ist für ein (nicht dargestelltes) Messgerät zur Messung der Extinktion einer Probe vorgesehen, bei welchem ein von einer Lichtquelle ausgehendes Strahlenbündel durch die Probe auf einen Detektor geleitet wird und durch eine Filtereinrichtung alternierend zwei Filter mit unterschiedlicher spektraler Durchlässigkeit in den Strahlengang des Strahlenbündels bewegbar sind. An dem Detektor entsteht dann ein Detektorsignal, welches zwei Komponenten enthält. Die eine Komponente beruht auf der Strahlung, die auf den Detektor fällt, wenn das eine der Filter im Strahlengang des Strahlenbündels ist. Diese Komponente soll als «Referenzsignal» bezeichnet werden. Eine zweite Komponente des Detektorsignals wird erzeugt, wenn das andere der beiden Filter im Strahlengang des Strahlenbündels ist. Diese Komponente soll als «Messsignal» bezeichnet werden. Es ist dabei angenommen, dass die Probe eine Substanz mit einer ausgeprägten Absorptionsbande enthält und das zweite Filter im Bereich dieser Absorptionsbande durchlässig ist. Das Messsignal liefert daher einen Messwert für die Konzentration der absorbierenden Substanz in der Probe. Das erste Filter ist ausserhalb der Absorptionsbande der gesuchten Probe durchlässig. Dieses Filter liefert ein Signal, das von der gesuchten Substanz nicht oder wenig beeinflusst wird und daher als Referenz dient.

Die Signalauswerterschaltung enthält einen rücksetzbaren Integrator 10, auf welchen das Detektorsignal synchronisiert mit der Filtereinrichtung während eines Referenzzeitintervalls und während eines Messzeitintervalls aufschaltbar ist. Messwerte werden somit durch Integration des Detektorsignals über feste Zeitintervalle gewonnen, wobei während des einen Zeitintervalls im wesentlichen das Referenzsignal und während des anderen Zeitintervalls im wesentlichen das Messsignal wirksam ist. Vom Ausgangssignal des Integrators ist ein Logarithmierer 12 beaufschlagt. Das Ausgangssignal des Logarithmierers 12 ist auf eine erste und eine zweite Speicherschaltung 14 bzw. 16 aufschaltbar. Eine Ablaufsteuerung 18 liefert Steuersignale, durch die das Detektorsignal während der Referenz- und Messzeitintervalle auf den Integrator 10 aufschaltbar und nach jedem Referenz- bzw. Messzeitintervall das Ausgangssignal des Logarithmierers 12 auf die erste bzw. zweite Speicherschaltung 14 bzw. 16 übertragbar ist. Anschliessend wird der Integrator 10 durch ein Steuersignal der Ablaufsteuerung jeweils auf Null zurückgesetzt. Ein Differenzverstärker 20 erhält die in den Speicherschaltungen 14 und 16 gespeicherten Signale und liefert an einem Ausgang 22 ein Ausgangssignal.

Der Integrator 10 enthält einen Operationsverstärker 24, dessen Ausgang 26 über einen Kondensator 28 mit dem invertierenden Eingang 30 verbunden ist. Der nichtinvertierende Eingang 32 ist geerdet. Der Integrator 10 ist durch einen Schalter 34 rücksetzbar, der parallel zu dem Kondensator 28 angeordnet ist. Das Detektorsignal ist auf den Eingang 30 des Integrators 10 über zwei parallele Kanäle 36, 38 aufgeschaltet, von denen jeder einen Widerstand 40 bzw. 42 und einen gesteuerten Schalter 44 bzw. 46 enthält. Wenigstens einer der vorgenannten Widerstände 40 und 42, in dem dargestellten Ausführungsbeispiel der Widerstand 42, ist einstellbar.

Weiterhin liegt am Eingang des Integrators 10 über eine Leitung 48 während des Referenz- bzw. des Messzeitintervalls je eine einstellbare Korrekturspannung, die dem Detektorsignal überlagert ist. Die gesteuerten Schalter 44 und 46 sind von der Ablaufsteuerung 18 so gesteuert, dass während des Referenzzeitintervalls der eine und während des Messzeitintervalls der andere Schalter 44 bzw. 46 leitend ist.

Die einstellbaren Korrekturspannungen werden an je einem Potentiometer 50 bzw. 52 abgegriffen, das zwischen einem gegenüber Erdpotential positiven und einem gegenüber Erdpotential negativen Potential liegt. Die Schleifer der Potentiometer 50 und 52 sind über je einen Schalter 54 bzw. 56 und je einen Widerstand 58 bzw. 60 mit dem Eingang 30 des Integrators über die Leitung 48 verbunden. Die Schalter 54 und 56 sind durch die Ablaufsteuerung 18 synchron mit je einem der gesteuerten Schalter 44 und 46 für das Detektorsignal im schliessenden Sinne ansteuerbar. Im vorliegenden Fall wird der Schalter 54 synchron mit dem Schalter 44 und der Schalter 56 synchron mit dem Schalter 46 geschlossen, wie durch die gestrichelten Linien 62 bzw. 64 angedeutet ist.

Der Ausgang 66 des Logarithmierers 12 ist über einen Schalter 68 mit der Speicherschaltung 14 und über einen Schalter 70 mit der Speicherschaltung 16 verbunden.

Die Schalter 68 und 70 werden ebenfalls durch die Ablaufsteuerung gesteuert. Die Steuerung erfolgt in der Weise, dass während des Referenzzeitintervalls der Schalter 44 geschlossen ist. Schalter 34 ist geöffnet. Der Integrator 10 integriert das Referenzsignal über das Referenzzeitintervall. Am Ende des Referenzzeitintervalls wird der Schalter 44 geöffnet. Das am Ausgang des Integrators 10 erscheinende Signal wird durch den Logarithmierer 12 logarithmiert. Schalter 68 wird kurzzeitig geschlossen, so dass dieses Signal auf die Speicherschaltung 14 gegeben wird. Anschliessend schliesst Schalter 34 vorübergehend, wodurch der Kondensator 28 entladen und der Integrator 10 auf Null zurückgesetzt wird. Während des Messzeitintervalls wird dann der Schalter 46 geschlossen. Das Messsignal wird über das Messzeitintervall integriert. Am Ende des Messzeitintervalls öffnet der Schalter 46. Das logarithmierte Ausgangssignal des Integrators wird über den vorübergehend schliessenden Schalter 70 auf die Speicherschaltung 16 übertragen. Nachdem dies geschehen ist, schliesst wieder vorübergehend der Schalter 34 und setzt den Integrator 10 auf Null zurück.

Die Einstellung der Potentiometer 50 und 52 und des einstellbaren Widerstands 42 erfolgt in der Weise, dass sich unter Berücksichtigung der Eigenstrahlung von Geräteteilen und der unterschiedlichen Durchlässigkeiten der Filter sowie von Abweichungen der Extinktion vom Beerschen Gesetz ein im wesentlichen linearer Zusammenhang zwischen Ausgangssignal am Ausgang 22 und Konzentration der gesuchten Substanz in der Probe ergibt.

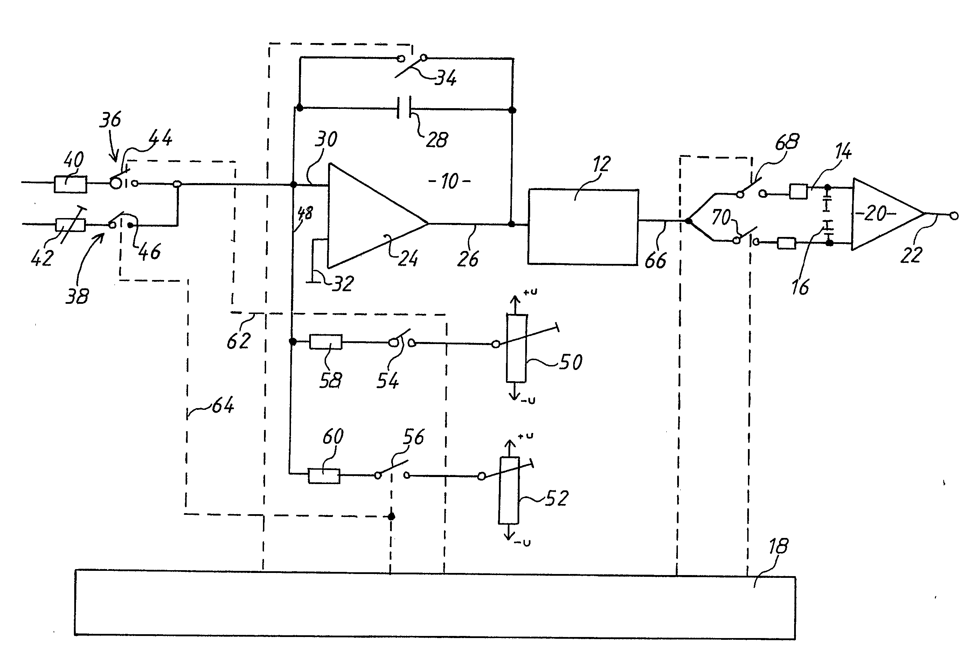

## Patentansprüche

1. Signalauswerterschaltung für ein Messgerät zur Messung der Extinktion einer Probe, bei welchem ein von einer Lichtquelle ausgehendes Strahlenbündel durch die Probe auf einen Detektor geleitet wird und durch eine Filtereinrichtung alternierend zwei Filter mit unterschiedlicher spektraler Durchlässigkeit in den Strahlengang des Strahlenbündels bewegbar sind, enthaltend:
einen rücksetzbaren Integrator (10), auf welchen das Detektorsignal synchronisiert mit der Filtereinrichtung während eines Referenzzeitintervalls und während eines Messzeitintervalls aufschaltbar ist,
einen vom Ausgangssignal des Integrators beaufschlagten Logarithmierer (12),

eine erste und eine zweite Speicherschaltung (14 bzw. 16), auf welche das Ausgangssignal des Logarithmierers aufschaltbar ist,
eine Ablaufsteuerung (18), welche Steuersignale liefert, durch die das Detektorsignal während der Referenz- und Messzeitintervalle auf den Integrator aufschaltbar, nach jedem Referenz- bzw. Messzeitintervall das Ausgangssignal des Logarithmierers auf die erste bzw. zweite Speicherschaltung übertragbar und anschliessend jeweils der Integrator rücksetzbar ist, und
einen Differenzverstärker (20), der die in den Speicherschaltungen gespeicherten Signale erhält und ein Ausgangssignal liefert,
dadurch gekennzeichnet, dass
(a) am Eingang (30) des Integrators (10) während des Referenz- bzw. des Messzeitintervalls je eine einstellbare Korrekturspannung dem Detektorsignal überlagert ist,
(b) das Detektorsignal auf den Eingang (30) des Integrators (10) über zwei parallele Kanäle (36, 38) aufgeschaltet ist, von denen jeder einen Widerstand (40, 42) und einen gesteuerten Schalter (44, 46) enthält,
(c) wenigstens einer der vorgenannten Widerstände (42) einstellbar ist und
(d) die gesteuerten Schalter (44, 46) von der Ablaufsteuerung (18) so gesteuert sind, dass während des Referenzzeitintervalls der eine und während des Messzeitintervalls der andere Schalter leitend ist,
wobei die Korrekturspannungen und der einstellbare Widerstand (42) so eingestellt werden, dass sich unter Berücksichtigung der Eigenstrahlung von Geräteteilen und der unterschiedlichen Durchlässigkeiten der Filter sowie von Abweichungen der Extinktion vom Beerschen Gesetz ein im wesentlichen linearer Zusammenhang zwischen Ausgangssignal und Konzentration ergibt.

2. Signalauswerterschaltung nach Anspruch 1, dadurch gekennzeichnet, dass
(a) die einstellbaren Korrekturspannungen an je einem Potentiometer (50, 52) abgegriffen werden, das zwischen einem gegenüber Erdpotential positiven und einem gegenüber Erdpotential negativen Potential (+U, −U) liegt,
(b) die Schleifer der Potentiometer (50, 52) über je einen weiteren Schalter (54, 56) und je einen Widerstand (58, 60) mit dem Eingang (30) des Integrators (10) verbunden sind und
(c) die weiteren Schalter (54, 56) durch die Ablaufsteuerung (18) synchron mit je einem der gesteuerten Schalter (44, 46) für das Detektorsignal im schliessenden Sinne ansteuerbar sind.

## Claims

1. Signal processing circuit for a measuring instrument for the measurement of the extinction of a sample, wherein a beam emanating from a light source is passed through the sample onto a detector, and a filter device is arranged to move alternatingly two filters having different spectral transmissivities into the path of rays of the beam, comprising:

a resettable integrator (10) to which the detector signal can be applied in synchronism with the filter device during a reference time interval and during a measuring time interval,

a logarithm forming circuit (12) to which the output signal of the integrator is applied,

a first and a second memory circuit (14 and 16, respectively) to which the output signal of the logarithm forming circuit is applied,

a run-off control (18) which provides control signals for applying the detector signal to the integrator during the reference and measuring time intervals, for transferring the output signal of the logarithm forming circuit to the first and second memory circuits, respectively, after each reference and measuring time interval, respectively, and for resetting the integrator subsequently, and

a differential amplifier (20) which receives the signals stored in the memory circuits and provides an output signal,
characterized in that
(a) an adjustable corrective voltage each is superposed at the input (30) of the integrator (10) during the reference and measuring time intervals, respectively,
(b) the detector signal is applied to the input (30) of the integrator (10) through two parallel channels (36, 38), each of which comprises a resistor (40, 42) and a controlled switch (44, 46),
(c) at least one of the aforementioned resistors (42) is adjustable, and
(d) the controlled switches (44, 46) are controlled by the run-off control (18) such that one switch is conductive during the reference time interval and the other one is conductive during the measuring time interval,
the corrective voltages and the adjustable resistor (42) being adjusted in such a way that a substantially linear relation between output signal and concentration is achieved taking into consideration the radiation emitted by instrument components themselves, and the different transmissivities of the filters as well as deviations of extinction from Beer's law.

2. Signal processing circuit as claimed in claim 1, characterized in that

(a) each of the adjustable corrective voltages is tapped from an associated potentiometer (50, 52), which is connected between a potential (+ U) positive with respect to ground potential and a potential (− U) negative with respect to ground potential,
(b) the sliders of the potentiometers (50, 52) are connected to the input (30) of the integrator (10) through an additional switch (54, 56) each and a resistor (58, 60) each, and
(c) each of the additional switches (54, 56) is arranged to be actuated in closing sense by the run-off control (18) synchronously with one of the controlled switches (44, 46) for the detector signal.

**Revendications**

1. Circuit d'évaluation de signaux pour un appareil de mesurage pour mesurer l'extinction d'un échantillon, dans lequel un faisceau lumineux émanant d'une source lumineuse est guidé à travers l'échantillon à un détécteur, et au moyen d'un dispositif de filtre deux filtres ayant une transmission spectrale différente peuvent être déplacés de manière alternante dans la marche des rayons du faisceau lumineux, contenant:

un intégrateur (10) qui peut être remis et auquel le signal de détécteur synchronisé avec le dispositif de filtre peut être appliqué pendant un interval de temps de référence et pendant un interval de temps de mesure,

un circuit (12) pour la formation de logarithmes auquel le signal de sortie de l'intégrateur est appliqué,

un premier et un deuxième circuit de mémoire (14 et 16, respectivement), auxquels le signal de sortie du circuit pour la formation de lorgarithmes peut être appliqué,

une commande séquentielle (18) qui fournit des signaux de commande, par lesquels le signal de détécteur peut être appliqué à l'intégrateur pendant les intervals de temps de référence et de mesure, le signal de sortie du circuit pour la formation de logarithmes peut être transmis respectivement au premier et au deuxième circuit de mémoire après respectivement chaque interval de temps de référence et de mesure, et ensuite l'intégrateur peut être remis, et

un amplificateur différenciateur (20), qui reçoit les signaux mémorisés dans les circuits de mémoire et qui fournit un signal de sortie,
caractérisé par le fait

(a) que chaque fois une tension de correction ajustable est superposée au signal de détécteur à l'entrée (30) de l'intégrateur (10) pendant respectivement l'interval de temps de référence et de mesure,
(b) que le signal de détécteur est appliqué à l'entrée de l'intégrateur (10) par l'intermédiaire de deux canaux parallèles (36, 38) dont chacun contient une résistance (40, 42) et un interrupteur (44, 46) commandé,
(c) qu'au moins l'une des résistances susmentionnées (42) est ajustable
(d) que les interrupteurs commandés (44, 46) sont commandés par la commande séquentielle (18) de sorte que le premier interrupteur est conductible pendant l'interval de temps de référence et l'autre pendant l'interval de temps de mesure les tensions de correction et la résistance ajustable (42) étant ajustées de sorte qu'une corrélation essentiellement linéaire entre signal de sortie et concentration s'ensuit, en tenant compte de la radiation propre de parties de l'appareil, et de la transmissibilité différente des filtres ainsi que de la déviation de l'extinction de la loi de Beer.

2. Circuit d'évaluation de signaux selon la revendication 1, caractérisé par le fait

(a) que les tensions de correction ajustables sont captées respectivement à un potentiomètre (50, 52), qui est situé entre un potentiel positif par rapport au potentiel de sol et un potentiel négatif par rapport au potentiel de sol,

(b) que chacun des balais des potentiomètres (50, 52) est lié par l'intermédiaire d'un autre interrupteur et d'une résistance avec l'entrée (30) de l'intégrateur (10) et

(c) que les autres interrupteurs (54, 56) peuvent être commandés dans les sens fermant par la commande séquentielle (18) de manière synchronisée avec chaque fois l'un des interrupteurs commandés (44, 46) pour le signal de détécteur.